(19) Europäisches Patentamt / European Patent Office / Office européen des brevets

(11) **EP 2 279 466 B1**

(12) **FASCICULE DE BREVET EUROPEEN**

(45) Date de publication et mention de la délivrance du brevet:
**18.04.2018 Bulletin 2018/16**

(21) Numéro de dépôt: **09765998.1**

(22) Date de dépôt: **20.05.2009**

(51) Int Cl.:
*G05B 23/02* *(2006.01)*

(86) Numéro de dépôt international:
**PCT/FR2009/000598**

(87) Numéro de publication internationale:
**WO 2009/153436 (23.12.2009 Gazette 2009/52)**

(54) **ESTIMATION D'UN CRITERE DE CHARGE SUBIE PAR UN COMPOSANT STRUCTUREL D'UN AERONEF, ET AIDE A LA DETECTION D'UN ATTERRISSAGE DIT "DUR" GRACE A UN TEL CRITERE**

SCHÄTZUNG EINES BELADUNGSKRITERIUMS FÜR DIE VON EINER STRUKTURKOMPONENTE EINES FLUGZEUGS GELADENE LAST UND UNTERSTÜTZUNG BEI DER ERKENNUNG EINER SOGENANNTEN HARTLANDUNG MITHILFE EINES SOLCHEN KRITERIUMS

ESTIMATING A LOADING CRITERION FOR THE LOAD EXPERIENCED BY A STRUCTURAL COMPONENT OF AN AIRCRAFT, AND ASSISTANCE WITH DETECTION OF A SO-CALLED HARD LANDING USING SUCH A CRITERION

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **22.05.2008 FR 0853350**

(43) Date de publication de la demande:
**02.02.2011 Bulletin 2011/05**

(73) Titulaire: **Airbus Operations**
**31060 Toulouse (FR)**

(72) Inventeurs:
• **LASTERE, Nicolas**
**F-31320 Auzeville Tolosane (FR)**
• **DUCHESNE, Mélissa**
**F-31170 Tournefeuille (FR)**
• **RAY, Emmanuel**
**F-31170 Tournefeuille (FR)**

(74) Mandataire: **Santarelli**
**49, avenue des Champs-Elysées**
**75008 Paris (FR)**

(56) Documents cités:
**EP-A- 0 657 723     US-A1- 2008 114 506**

• **ROEMER M J ET AL: "Autonomous impact damage detection and isolation prediction for aerospace structures" AEROSPACE CONFERENCE, 2005 IEEE, IEEE, PISCATAWAY, NJ, USA, 5 mars 2005 (2005-03-05), pages 3592-3600, XP031213743 ISBN: 9780780388703**

**Description**

La présente invention se rapporte à un procédé et un système d'estimation d'un critère de charge subie par un composant structurel d'un aéronef, en particulier un avion de transport civil, à un procédé et un système correspondant d'aide à la détection d'un atterrissage dur dudit aéronef, ainsi qu'à un aéronef comprenant de tels systèmes.

Par charge, on entend, dans le cadre de la présente invention, tout effort que supporte la structure de l'aéronef, et en particulier les composants analysés. Les "charges", dans leur sens générique, regroupent toute force, moment, facteur de charge (ou accélération), contraintes structurelles.

Dans un but évident de sécurité, une inspection de la structure de l'aéronef, ainsi que la réparation d'éventuelles détériorations, doivent être effectuées dès lors que l'aéronef est soumis à des charges importantes, ce qui est notamment le cas lors d'un atterrissage dur (ou "*hard landing*" selon la terminologie anglo-saxonne largement utilisée dans le domaine). Un atterrissage dur se caractérise par un facteur de charge vertical (ou accélération) et une vitesse verticale de l'aéronef importants lors de l'atterrissage.

L'inspection évoquée ci-dessus est généralement déclenchée par le pilote, en fonction de ce qu'il a ressenti au moment de l'atterrissage, lorsqu'il juge que cet atterrissage a pu provoquer des dommages réels de la structure de l'aéronef. Cependant, les réactions perçues au niveau du poste de pilotage traduisent parfois mal le niveau de charge réel appliqué sur l'ensemble de l'aéronef, et en particulier sur chaque composant que l'on souhaite surveiller.

Des systèmes automatisant la mesure de charges de dimensionnement d'un aéronef ont alors été proposés. Ainsi, la solution du document EP-A1-0 657 723 décrit un système comparant une charge mesurée à un emplacement, à une valeur de charge admissible déterminée à partir d'une loi d'évolution prédéterminée et d'un ensemble de paramètres mesurés. Le résultat de la comparaison permet alors d'indiquer si une inspection doit être effectuée, et éventuellement les parties de l'aéronef devant être inspectées.

Néanmoins, cette solution souffre de nombreux inconvénients.

D'une part, elle requiert l'incorporation, dans l'aéronef et en sus des capteurs classiquement utilisés, de capteurs spécifiques pour mesurer les charges subies aux divers emplacements d'intérêt. De tels capteurs peuvent être nombreux selon le nombre d'éléments à surveiller. Ils constituent, en outre, un coût financier conséquent pour équiper toute une flotte d'avions, un coût de maintenance des capteurs (pour remédier à d'éventuelles dérives), ainsi qu'un coût en poids supplémentaire, pour chacun des avions, proportionnel au nombre d'emplacements à analyser.

D'autre part, la réalisation parfois millimétrique des aéronefs rend l'intégration de tels capteurs très complexe sans requérir des études onéreuses et approfondies, voire impossible dans les régions inaccessibles. Il en résulte que l'inspection physique de ces parties non équipées par un opérateur doit toujours être maintenue après chaque atterrissage. Cette situation est alors préjudiciable en termes de coûts et de temps de maintenance de l'aéronef.

On connaît également, par la publication US 2008/114506, un procédé et un système de détection d'événements chargeant la structure d'un avion à l'aide d'un algorithme heuristique, type réseau de neurones.

Des pics de charges ou contraintes sur la structure sont estimés à partir de valeurs initiales et de valeurs de crête de paramètres mesurés, puis sont comparés à des valeurs seuil pour détecter ou non un atterrissage dur.

Toutefois, les valeurs de crête pour chaque paramètre mesuré se produisent généralement à des instants différents. Il en résulte qu'une combinaison de ces valeurs, par le réseau de neurones, ne peut retranscrire précisément les sollicitations maximales subies par la structure de l'avion à un emplacement précis non mesuré.

En effet, soit les valeurs de crête sont prises indépendamment et reflètent chacune un endroit précis (mais peu nombreux) de l'avion, soit elles combinent des mesures correspondant à des instants différents et, de ce fait, ne peuvent retranscrire précisément les contraintes subies en un endroit précis.

En outre, ces valeurs de crête ne retranscrivent pas réellement les efforts subis par une structure. US2008/0114506 décrit un système de détection d'événements de charge. La présente invention entend remédier aux inconvénients de l'art antérieur en proposant un procédé et un système associé permettant d'estimer plus simplement et précisément les charges subies en de nombreux emplacements de la structure de l'aéronef.

A cet effet, l'invention vise notamment un procédé d'aide à la détection d'un atterrissage dur d'un aéronef, caractérisé en ce qu'il comprend:

- la détermination d'un instant d'impact dudit aéronef sur une piste d'atterrissage à partir de paramètres mesurés;
- l'estimation d'une pluralité desdits paramètres audit instant d'impact déterminé;
- l'estimation d'au moins un critère de charge d'un composant structurel dudit aéronef, ladite estimation comprenant une étape de calcul d'au moins un critère de charge dudit composant structurel à l'aide d'au moins un réseau de neurones recevant en entrée lesdits paramètres estimés.

Ainsi, lors de l'atterrissage, des critères de charge en divers emplacements de la structure d'aéronef sont calculés à partir des mesures effectuées au moment de l'impact de cet aéronef avec la piste, c'est-à-dire lorsque les contraintes d'atterrissage sur la structure sont les plus importantes. On obtient des estimations précises des contraintes à cet instant.

En pratique, on opère de la sorte pour plusieurs composants structurels, c'est-à-dire en utilisant plusieurs réseaux de neurones configurés en conséquences, recevant chacun tout ou partie des paramètres estimés. Ces composants peuvent par exemple être la voilure, le train d'atterrissage, le fuselage, les mâts de réacteur.

Grâce à la présente invention, on dispose d'informations sur les charges subies par un ensemble de composants structurels de l'aéronef, même non équipés de capteurs. Il devient alors aisé, par exemple par simple comparaison, d'évaluer si ces composants nécessitent une inspection. Ces critères de charge calculés permettent également au pilote de conforter ou infirmer son analyse par ressenti, pour fournir un rapport de vol.

On note par ailleurs que les réseaux de neurones permettent de représenter simplement des modèles très complexes. Ces modèles sont ainsi créés et utilisés à moindres coûts, notamment de traitements, ce qui permet de réaliser le procédé selon l'invention à bord de l'aéronef. On utilise ainsi ces réseaux pour représenter les modèles, généralement non connus, liant les valeurs mesurées et différents emplacements structurels de l'aéronef.

On comprend ici que le réseau de neurones correspond à toute représentation ou structure mathématique pour l'exploitation de poids et seuils qui auront été déterminés au préalable, notamment par apprentissage du réseau à partir d'au moins un jeu d'apprentissage associant des valeurs des paramètres mesurés à des valeurs de critère de charge.

La puissance de modélisation des réseaux de neurones permet également de se satisfaire des capteurs classiques équipant les avions, sans en installer de nouveaux, afin de déterminer les efforts en tout point de la structure de l'aéronef. De tels capteurs sont, par exemple, ceux prévus pour l'enregistrement des mesures d'un enregistreur numérique de données de vol ou DFDR ("*Digital Flight Data Recorder*" selon la terminologie anglo-saxonne). Classiquement, il s'agit de façon non exhaustive des accélérations et vitesses du corps rigide de l'avion, de différents angles de représentation de l'avion dans l'espace et des vitesses associées à ces angles, de mesures dites statiques telles que la position du centre de gravité de l'avion, le carburant à bord et le poids brut de l'avion.

Ainsi, l'on n'a pas besoin de prévoir un capteur de mesure de charge pour chaque composant à surveiller.

En outre, sans l'ajout de nouveaux capteurs, il est aisé d'intégrer la présente invention aux avions déjà en service.

Dans un mode de réalisation, on prévoit une étape préalable de formation dudit réseau de neurones, cette étape préalable comprenant une première étape d'exécution d'une pluralité de simulations en faisant varier au moins un, généralement un ensemble, desdits paramètres mesurés, la simulation déterminant une valeur simulée d'une charge subie par ledit composant, et une deuxième étape d'apprentissage dudit réseau de neurones à l'aide desdites simulations, ledit réseau de neurones recevant en entrées ledit au moins un paramètre. Grâce à la simulation, généralement assistée par ordinateur, il est possible d'obtenir des mesures cohérentes pour des composants inaccessibles dans un avion et notamment en tout point de l'avion.

Dans un autre mode de réalisation de l'invention, ledit au moins un critère de charge calculé est comparé à au moins une première valeur seuil de sorte à déterminer une opération d'inspection d'un premier type à opérer sur ledit composant structurel, suite audit atterrissage. Cette première valeur seuil peut représenter une première capacité structurale du composant, par exemple une limite entre l'utilisation du composant dans le cadre d'une déformation élastique et l'utilisation du composant dans le cadre d'une déformation plastique.

Il est ainsi possible de prévoir plusieurs valeurs seuil délimitant autant de types d'opérations d'inspection à prévoir. En particulier, si ledit au moins un critère de charge calculé est supérieure à ladite première valeur seuil, on compare ledit critère de charge calculé à une deuxième valeur seuil de sorte à déterminer une opération d'inspection d'un deuxième type à opérer sur ledit composant structurel. Cette deuxième valeur seuil peut représenter une autre capacité structurale du composant à partir de laquelle des dommages affectant la sécurité de l'aéronef peuvent être créés. Des mesures de sécurité telles que le blocage de l'aéronef au sol jusqu'à analyse de celui-ci par l'avionneur peuvent être alors prévues.

Ainsi, grâce à ces dispositions, on peut obtenir rapidement et automatiquement une indication des composants structurels à inspecter selon le degré d'inspection à effectuer. La maintenance et l'entretien de l'avion s'en trouvent facilités.

On peut également prévoir qu'une pluralité de critères de charge d'une pluralité respective de composants structurels est calculée et que le procédé comprend un étape d'indication audit pilote, par exemple par l'affichage d'une information selon laquelle l'atterrissage a été dur, lorsque la comparaison d'au moins un critère de charge est telle qu'une opération d'inspection doit être effectuée. Cela permet au pilote de confirmer ou non son analyse par ressenti.

Dans un mode de réalisation de l'invention, ladite détermination d'un instant d'impact comprend le calcul de l'instant correspondant au premier impact de l'aéronef sur la piste, ledit calcul de l'instant étant réalisé à l'aide de paramètres mesurés représentatifs de la vitesse d'au moins une roue dudit aéronef. Au contraire des solutions connues basant la détermination d'impact à l'aide de mesures d'enfoncement d'amortisseurs des trains d'atterrissage, ce mode de réalisation permet d'obtenir une détermination plus précise de l'instant d'impact compatible avec le calcul d'un critère de charge.

Notamment, ce calcul peut comprendre la comparaison de la vitesse de l'au moins une roue dudit aéronef avec une valeur seuil. Par exemple, elle comprend une régression linéaire à partir de deux mesures de vitesse de ladite au moins une roue.

En particulier, ladite détermination comprend, en outre, le calcul d'au moins un autre instant d'impact, postérieur audit instant de premier impact, ledit calcul de l'autre instant étant réalisé à partir d'un paramètre mesuré d'accélération verticale dudit aéronef. Alors que la détermination d'un impact ultérieur à l'aide de la vitesse des roues n'est plus possible dès le premier impact réalisé, cette caractéristique permet d'assurer par un autre biais une détermination de l'instant d'impact ultérieur également plus précise que dans les solutions connues et compatible avec la précision requise pour le calcul d'un critère de charge.

Selon une caractéristique particulière, on calcule un incrément d'accélération verticale aux voisinages d'au moins deux instants représentatifs d'au moins deux impacts et on sélectionne l'instant présentant le plus grand incrément. On simplifie ainsi les calculs ultérieurs en se concentrant sur l'impact ayant le plus grand mouvement vertical de l'aéronef, c'est-à-dire celui susceptible d'engendrer le plus de dommages.

Comparativement à l'état de la technique utilisant des valeurs de crête, les incréments sont représentatifs des efforts soumis à une structure car ils sont directement liés à l'énergie subie par celle-ci pendant l'instant de calcul de l'incrément.

De façon classique, les capteurs utilisés dans les avions effectuent des mesures discrètes à des vitesses d'échantillonnage définies. Ainsi, on prévoit que ladite pluralité de paramètres est estimée par interpolation linéaire audit instant d'impact desdits paramètres mesurés. On accroît ainsi la précision du calcul final du critère de charge.

Selon une caractéristique de l'invention, on envisage que lesdits paramètres sont mesurés et enregistrés à compter de l'instant où ledit aéronef passe sous une altitude prédéfinie par rapport à ladite piste d'atterrissage lors d'une phase d'approche. En combinaison, on prévoit de cesser ces mesures et enregistrements dès l'instant où la vitesse de l'aéronef, roulant sur ladite piste, passe sous une vitesse sol seuil. En variante, les mesures et enregistrements cessent après une durée prédéterminée, par exemple 30 secondes.

On s'assure ainsi de disposer des mesures pour aussi bien le premier impact de l'aéronef sur la piste que pour les éventuels rebonds ultérieurs de l'aéronef.

Par ailleurs, il peut être prévu que les mesures cessent lorsque l'aéronef atteint une première vitesse prédéterminée ou après une durée donnée, et, dans ce cas, lesdites étapes de détermination et d'estimation sont déclenchées lorsque l'aéronef atteint une seconde vitesse prédéterminée inférieure ou égale à ladite première vitesse. La valeur seuil constituée par la première vitesse prédéterminée a lieu dans la plupart des cas. L'utilisation du seuil "durée donnée" permet de limiter l'espace mémoire utilisée lors de situations plus rares, par exemple lorsqu'un avion fait un atterrissage avorté et re-décolle. Les données pourront quant même être traitées pour déterminer l'impact de l'atterrissage avorté sur la structure.

Selon une caractéristique particulière de l'invention, ladite pluralité de paramètres est estimée par interpolation audit instant d'impact desdits paramètres mesurés.

Selon un aspect de l'invention, le procédé comprend, préalablement à ladite étape de détermination d'un instant d'impact, une étape de vérification des paramètres mesurés, notamment de leur présence, de la fréquence d'échantillonnage associée et/ou de leur appartenance à une plage de valeur prédéfinie. Ainsi, l'invention se prémunit d'éventuelles défaillances des systèmes/capteurs et ne requière pas des capteurs totalement fiables.

Selon un autre aspect de l'invention, il est prévu de créer et calculer au moins un paramètre non mesuré. C'est notamment une force des réseaux de neurones de permettre, à partir de mesures diverses et variées, la détermination d'autres paramètres, parfois non mesurables. Grâce à ceux-ci, de meilleurs décisions et calculs peuvent être menés.

Corrélativement, l'invention a également trait à un système d'aide à la détection d'un atterrissage dur d'un aéronef, caractérisé en ce qu'il comprend:

- des moyens de mesures de paramètres dudit aéronef;
- un moyen de détermination d'un instant d'impact dudit aéronef sur une piste d'atterrissage à partir desdits paramètres mesurés;
- un moyen d'estimation d'une pluralité desdits paramètres audit instant d'impact déterminé;
- un système d'estimation d'au moins un critère de charge d'un composant structurel dudit aéronef, comprenant au moins un réseau de neurones agencé pour recevoir en entrée lesdits paramètres estimés et pour fournir en sortie au moins un critère de charge dudit composant structurel.

De façon optionnelle, le système peut comprendre des moyens se rapportant aux caractéristiques du procédé d'aide à la détection d'un atterrissage dur ci-dessus.

L'invention vise également un aéronef comprenant un système d'estimation d'un critère de charge ou d'aide à la détection d'un atterrissage dur tel que présenté ci-dessus.

De façon optionnelle, l'aéronef peut comprendre des moyens se rapportant aux caractéristiques de systèmes présentées ci-dessus.

D'autres particularités et avantages de l'invention apparaîtront encore dans la description ci-après, illustrée par les dessins ci-joints, dans lesquels :

- la **figure 1** représente une vue générale d'un tracé d'aéronef lors de son atterrissage sur piste;
- la **figure 2** représente schématiquement un exemple d'architecture de système selon la présente invention, embarqué dans l'aéronef de la **figure 1**;
- la **figure 3** illustre la structure générale d'un réseau de neurones;
- la **figure 4** représente, sous forme d'un logigramme, des étapes d'un exemple de traitement selon l'invention;
- la **figure 5** représente, sous forme d'un logigramme, des étapes du traitement des paramètres mesurés lors du processus de la **figure 4**;
- la **figure 6** illustre un exemple d'organisation de trains d'atterrissage illustrant une étape du processus de la **figure 5**;
- la **figure 7** illustre le calcul d'un instant de premier toucher da l'avion de la **figure 1** sur la piste;
- la **figure 8** illustre le calcul d'un instant de toucher ultérieur de l'avion sur la piste correspondant à un rebond de celui-ci;
- la **figure 9** illustre l'étape de calcul d'un critère de charge mis en oeuvre lors du processus de la **figure 4**; et
- la **figure 10** illustre l'étape de calcul d'un critère de charge mis en oeuvre lors du processus de la **figure 4**.

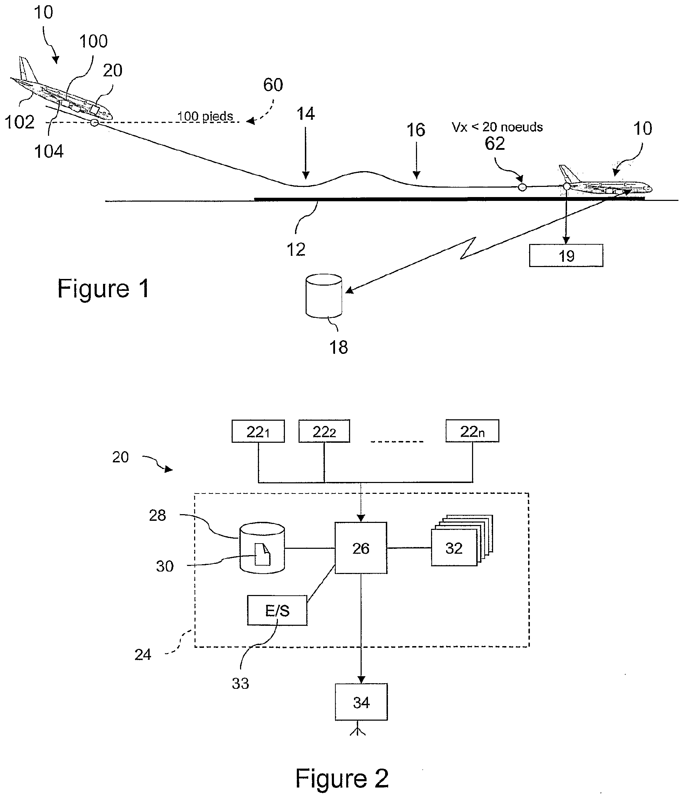

Sur la **figure 1**, on a représenté un avion 10 lors de son atterrissage sur une piste 12 d'aéroport. Sur cet exemple, la trajectoire de l'avion 10 montre qu'il subit un rebond et présente donc deux impacts 14 et 16 avec le sol de la piste avant de s'immobiliser en fin de piste. L'avion 10 est en communication avec une station 18, ici prévue à l'aéroport, pour échanger des données.

L'avion 10 embarque à son bord un système 20 pour la mise en oeuvre de l'invention, un exemple de ce système étant plus détaillé sur la **figure 2**. La finalité de ce système 20 est de fournir un rapport renseignant de la sévérité de l'atterrissage, éventuellement détaillé en précisant différents composants structurels potentiellement altérés par l'atterrissage.

En référence à la **figure 2**, ce système 20 pour déterminer la sévérité de l'atterrissage comprend:

- une pluralité de capteurs $22_i$ répartis à divers emplacements de l'avion 10;
- un système informatique 24 comprenant un unité de traitement 26, une mémoire 28 mémorisant un fichier 30 de paramètres mesurés dans l'avion 10 et plusieurs définitions de réseaux de neurones 32, ainsi qu'une interface 33 avec des moyens d'entrées et de sorties, type écran et clavier, prévus dans le cockpit de l'avion 10; et
- un moyen de communication 34, type radio ou système ACARS ("*Aircraft Communications Addressing and Reporting System*" selon la terminologie anglo-saxonne), permettant de communiquer des données avec la station 18.

Les capteurs $22_i$ sont des capteurs classiquement utilisés dans les avions pour diverses mesures de paramètres dits "paramètres avion". Ceux-ci correspondent aux paramètres enregistrés de manière standard pour l'enregistreur numérique de données de vol DFDR équipant les avions. Ici, on prévoit la mesure de paramètres d'accélération et de vitesse du corps rigide de l'avion (par exemple la vitesse au sol Vx(t)), la mesure de différents angles permettant la représentation de l'avion dans l'espace (par exemple l'angle de roulis φ(t)), la mesure des vitesses associées à ces mêmes angles, la mesure de paramètres considérés comme "statiques" au regard de l'atterrissage tels que la position du centre de gravité de l'avion 10, le carburant à bord et le poids brut de l'avion.

D'autres paramètres sont classiquement mesurés et leurs capteurs associés peuvent également être prévus sans affecter l'invention, par exemple la position des volets, de la gouverne, ...

On utilise des capteurs présentant une fréquence d'échantillonnage définie (Δt étant la période d'échantillonnage) pour mesurer les paramètres variant dynamiquement. Les paramètres relativement stable tout au long de l'atterrissage ne sont mesurés qu'une seule fois lors du début d'enregistrement comme expliqué plus tard; c'est notamment le cas de l'estimation du carburant à bord, du poids de l'avion ainsi que de celui du centre de gravité.

Le système informatique 24 appartient à un système global de surveillance des conditions de l'avion, autrement appelé ACMS ("*Aircraft Condition Monitoring System*" selon la terminologie anglo-saxonne). Le fichier 30 est un fichier numérique stockant les paramètres mesurés par les capteurs $22_i$ au fur et à mesure de leurs acquisitions, ces paramètres étant éventuellement horodatés pour une exploitation ultérieure plus aisée. Ce fichier 30 peut, en fin d'atterrissage, être transmis, via les moyens radio 34, à la station au sol 18 pour effectuer une analyse similaire ou plus poussée que celle réalisée à bord de l'avion et décrite ci-après dans un exemple.

Chaque définition de réseau de neurones 32 correspond à une modélisation mathématique pour le calcul d'un charge subie par un composant structurel de l'aéronef, type une voilure 100, une portion de fuselage 102 ou un mât moteur 104. On dispose d'autant de définitions 32 qu'il y a de composants structurels identifiés à surveiller lors de l'atterrissage.

Ces définitions 32 comprennent des coefficients (poids et seuils) permettant de créer, de manière logicielle dans l'unité de traitement 26, des réseaux de neurones, ici de type réseau de neurones linéaire entièrement connecté à plusieurs couches intermédiaires, ici deux, et à rétroaction ("*two-hidden layer linear feed-forward fully-connected neural network*").

Les réseaux de neurones correspondent à des structures mathématiques mises en oeuvre généralement par une programmation logicielle, utilisant les poids et seuils déterminés lors d'un apprentissage préalable de la structure.

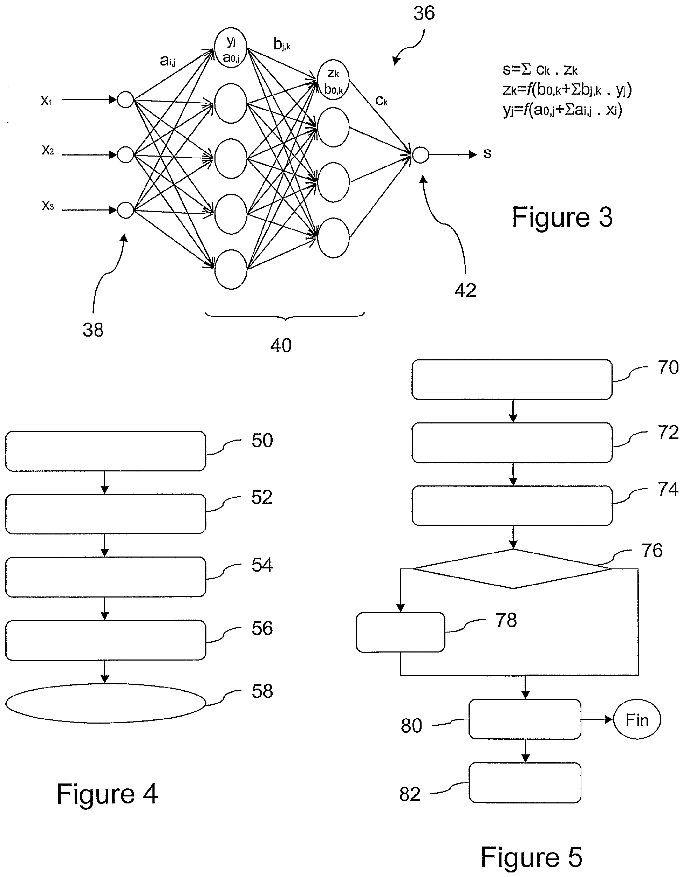

Une illustration partielle d'un tel réseau 36 est proposée en **figure 3**, disposant d'une couche d'entrée 38 recevant des entrées $x_i$, des deux couches intermédiaires 40 définies par les poids $a_{i,j}$ et $b_{j,k}$ et par les seuils $a_{0,j}$ et $b_{0,k}$, d'une couche de sortie 42 définie par ses coefficients $c_k$ et fournissant une valeur de sortie s (les valeurs seuils sont ici unitaires pour chacun des neurones des couches d'entrées 38 et de sortie 42). Un tel réseau 36 est muni d'une fonction d'activation *f(x)*, par exemple 1/(1+x) à chaque neurone.

Les couches intermédiaires 40 sont notamment pourvues chacune de 20 à 30 neurones, par exemple 25 neurones.

Comme illustré par la **figure 4**, le présent exemple comprend généralement une première phase d'acquisition des paramètres de l'avion 50 en relevant notamment les mesures des capteurs $22_i$, une deuxième phase de traitement de ces paramètres acquis 52, puis le calcul 54 d'un critère de charge pour un composant structurel (100, 102, 104) de l'avion 10, notamment à l'aide du réseau de neurones 36 associé à ce composant structurel (tandis que d'autres paramètres peuvent être traités directement comme on le verra par la suite), et enfin la détermination 56 de la sévérité de l'atterrissage au moins au regard du critère de charge calculé.

En sortie de traitement, on obtient une indication 58, par exemple unique, qui est affichée dans le cockpit de l'avion 10 pour aider le pilote à confirmer son ressenti de l'atterrissage aux fins d'établir un rapport sur la sévérité de l'atterrissage.

Cette indication 58 peut également prendre la forme d'un rapport informatique automatiquement transmis par exemple aux équipes de maintenance.

En variante, cette indication 58 peut préciser la situation de sévérité au regard de chacun des composants analysés, comme évoquée par la suite.

Plus en détail, la première phase 50 d'acquisition comprend l'enregistrement des mesures effectuées dans le fichier 30. Cette acquisition est déclenchée lors que l'avion 10 est en approche et passe sous un plafond prédéterminé 60, comme illustré par la **figure 1**, ici l'altitude de 100 pieds au dessus de la piste (soit 300 m environ). Les acquisitions et enregistrements des mesures sont poursuivis jusqu'à ce que l'avion 10 ait définitivement atterri. Pour ce faire, on cesse ces opérations après une période de 30 secondes jugée suffisante. En variante, on peut prévoir de cesser ces opérations dès lors que la vitesse au sol de l'avion 10 passe sous une valeur prédéterminée 62, ici 20 noeuds (environ 37 km.h$^{-1}$), permettant d'avoir entre 30 et 60 secondes d'enregistrement de paramètres pour le traitement ultérieur 19. Pour la suite de la description, on utilise l'unité de "noeud" largement diffusée dans le domaine aéronautique. L'homme du métier saura aisément convertir ces mesures en km.h$^{-1}$ par l'équivalent 1 noeud = 1,85 km.h$^{-1}$.

Le traitement 52 des données ainsi acquises est déclenché, quant à lui, lorsque la vitesse au sol de l'avion 10 passe également sous une valeur prédéterminée, par exemple la même valeur que celle mettant fin aux acquisitions. En variante, on peut retenir une valeur plus faible permettant de commencer le traitement ultérieurement, par exemple à l'arrêt de l'avion au parking.

Le traitement 52 vise à obtenir les paramètres pertinents pour l'évaluation des critères de charge des composants surveillés au moment de l'impact le plus fort.

Comme illustré par la **figure 5**, ce traitement 52 comprend une première étape 70 de prétraitement au cours de laquelle on vérifie que tous les paramètres mesurés attendus pour la suite de l'analyse sont présents. Puis on vérifie que la fréquence d'échantillonnage correspond à celle attendue. Enfin, on s'assure que les valeurs acquises des paramètres satisfont des plages de valeurs prévues pour ces paramètres. A défaut un message d'erreur peut être remonté au système et au pilote.

A l'étape 72, on détermine l'instant $t_0$ de premier impact 14 de l'avion 10 sur la piste 12. En effet, plusieurs impacts successifs peuvent avoir lieu, par exemple lorsque l'avion 10 rebondit sur la piste 12.

D'une façon générale, on utilise la vitesse des roues des trains d'atterrissage pour déterminer cet instant.

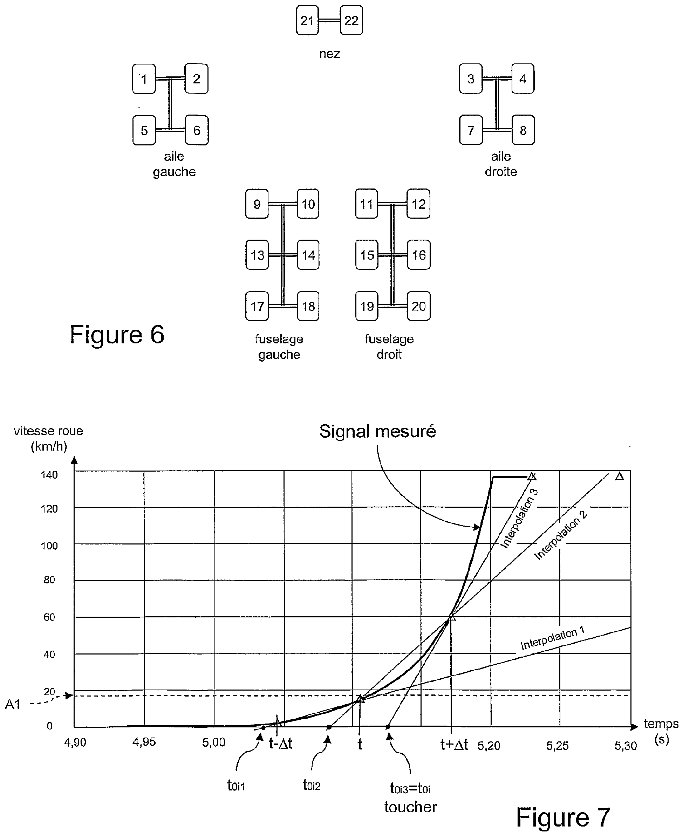

On illustre cette étape à l'aide de la **figure 6** représentant les trains d'atterrissage d'un avion A380. 22 roues sont réparties sur cinq trains. Seules les roues R1 à R16 de la figure sont munies de tachymètres pour mesurer leurs vitesses respectives.

On récupère donc les vitesses linéaires $\omega_i$ des roues R1 à R16 enregistrées dans le fichier 30. On détermine l'instant $t_i$ où les vitesses mesurées dépassent une valeur seuil A1, ici 15 noeuds.

En notant $\Delta t$ la période d'échantillonnage des mesures sur les roues, ici 1/16 s, on calcule pour chacune des roues R1 à R16, l'instant t tel que $\omega_i(t_i) < A1$ et $\omega_i(t_i+\Delta t) > A1$, ce qui représente sensiblement l'instant du toucher de la roue i sur la piste 12.

A partir de cette valeur $t_i$, on calcule trois valeurs $t_{0i1}$, $t_{0i2}$, $t_{0i3}$ par interpolation, telles qu'illustrées sur la **figure 7**.

Puis on choisit comme instant $t_{0i}$ de toucher de la roue i sur la piste, la valeur maximale obtenue: $t_{0i} = \max\{t_{0i1}, t_{0i2}, t_{0i3}\}$.

Le toucher $t_{0i}$ le plus précoce pour l'ensemble des roues correspond à l'instant $t_0$ de premier impact de l'avion 10 sur la piste 12: $t_0 = \min\{t_{0i}\}_{i\in[1;16]}$.

On a ainsi interpolé la valeur $t_0$ de l'instant d'impact à partir des mesures enregistrées.

A l'étape 74, on calcule les paramètres correspondant au moment de l'impact 14 déterminé. Ici, on s'intéresse aux paramètres dynamiques qui nécessitent une acquisition dans le temps, au contraire de paramètres peu variables tels que le poids de l'avion, la carburant à bord ou le centre de gravité acquis une fois pour toute au début de l'enregistrement 60.

On interpole les paramètres dynamiques à l'instant $t_0$ à partir des mesures enregistrées, ici par interpolation linéaire entre les deux échantillons mémorisés au voisinage de $t_0$. On obtient ainsi des accélérations et vitesses interpolées du corps rigide de l'avion (par exemple les accélérations latérales et verticales à $t_0$: $ny_0$ et $nz_0$), des angles interpolés de représentation dans l'espace de l'avion, des vitesses angulaires interpolées correspondantes, tous à l'instant $t_0$ du toucher..

On détermine ensuite la plus grande accélération verticale $nz_{0max}$ subie sensiblement au moment et postérieurement de l'impact, comme suit:

$$nz_{0max} = \max \{ nz(t) \} \text{ lorsque } t\in[t_0; t_0 + 1\text{seconde}].$$

On déduit alors l'incrément de facteur de charge verticale subie:

$$\Delta nz_0 = (nz_{0max} - nz_0)$$

On note ici que l'incrément est généralement représentatif du niveau de charge subi par un composant, contrairement à une valeur crête qui, elle seule, ne donne pas l'intensité de la charge.

De façon similaire, on détermine l'incrément de facteur de charge latérale subie: $\Delta ny_0 = \max(|ny(t) - ny_0|)$ lorsque $t\in[t_0; t_0 + 1\text{seconde}]$.

L'ensemble des paramètres correspondant à l'instant $t_0$ d'impact peut être mémorisé sous forme d'un vecteur d'une dimension. Un vecteur K1 peut être appliqué pour multiplier ce vecteur de paramètres afin d'appliquer, le cas échéant, un coefficient correcteur. C'est notamment le cas lorsque les essais pour élaborer les réseaux de neurones 36 sont réalisés dans des conditions légèrement différentes que lors de l'exploitation de l'avion, par exemple avec des fréquences d'échantillonnage différentes. Par défaut, ce vecteur est composé uniquement de 1.

On calcule également lors de cette étape 74, un coefficient de dérotation $\theta_{d\text{-}derot}$ correspondant à la valeur maximale d'abaissement du nez de l'avion 10 dans la deuxième phase de l'atterrissage (la vitesse angulaire de tangage $\theta_d(t)$ étant négative lors de l'abaissement du nez), c'est-à-dire après le toucher initiale 14 à $t_0$. Ce calcul est effectué à l'aide de la vitesse angulaire de tangage $\theta_d(t)$ comme suit:

on détermine $t_2$ tel que l'angle de tangage $\theta(t_2) < A2$, par exemple A2 = 1°. Cela correspond à un avion 10 quasiment à l'horizontal; puis

$$\theta_{d\text{-}derot} = \min \{ \theta_d(t) \} \text{ pour } t\in[t_2; t_2 + 1\text{seconde}].$$

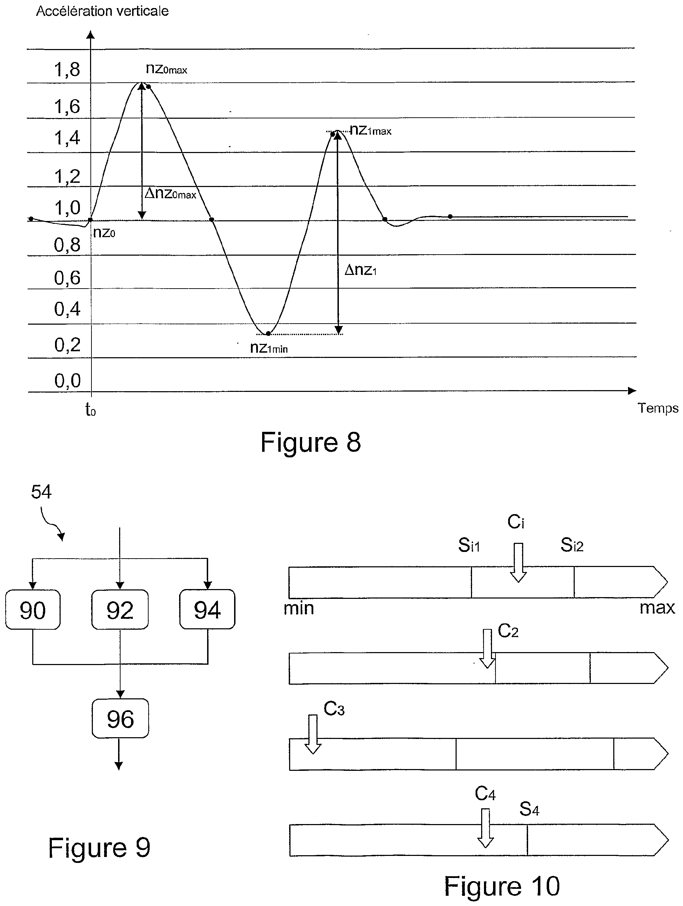

A l'étape 76, on détermine si un rebond 16 de l'avion 10 a eu lieu et le cas échéant si on en tient compte, comme illustré sur la **figure 8**.

Pour ce faire, on utilise une fenêtre glissante de 1 seconde appliquée aux mesures enregistrées.

On détermine si une telle fenêtre existe dans laquelle:

$\max(nz(t)) - \min(nz(t)) > A3$, par exemple A3 = 0,7g; auquel cas un rebond a été identifié. Les valeurs nz de la **figure 8** tiennent compte de la pesanteur. L'équilibre est donc obtenu pour une accélération égale à 1 g.

On tient compte du rebond uniquement si cet incrément $\max(nz(t)) - \min(nz(t)) > \Delta nz_0$. En effet, ici on cherche à déterminer l'instant où l'accélération verticale subie par l'avion 10 est la plus grande que lors du premier rebond. On évacue alors les rebonds présent un incrément inférieur à celui du premier impact $t_0$ sur la piste 12.

Si plusieurs rebonds ont été identifiés, on ne conserve que celui présentant un incrément d'accélération verticale $\Delta nz$ le plus important.

Dans le cas où un rebond 16 est identifié et conservé (sortie "oui" de l'étape 76 sur la **figure 5**), on exécute l'étape 78 consistant à déterminer les valeurs des paramètres à l'instant de ce rebond.

A cette étape, on calcule l'accélération verticale minimale $nz_{1min}$ obtenue dans cette fenêtre temporelle identifiée correspond à l'instant $t_1$ d'impact de l'avion 10 sur la piste 12 lors du rebond 16 identifié. On calcule également l'accélération verticale maximale $nz_{1max}$ dans cette fenêtre (l'instant associé est noté $t_{1max}$) de sorte à définir l'incrément à cet impact de rebond:

$$\triangle nz_1 = (nz_{1max} - nz_{1min}).$$

A l'étape 78 toujours, on calcule de façon similaire à l'étape 74 les paramètres à l'instant $t_1$ de l'impact de rebond.

On calcule également l'incrément de charge latérale $\triangle ny_1 = \max(|ny(t) - ny_1|)$ lorsque $t \in [t_1; t_1 + 1\text{seconde}]$, où $|x|$ est la valeur absolue de x.

Un facteur K2 similaire à K1 est éventuellement utilisé pour appliquer des coefficients correcteurs à ces paramètres calculés.

On poursuit à l'étape 80.

Si aucun rebond n'est identifié ou conservé (sortie "non" de l'étape 76), on passe directement à l'étape 80.

Pour la suite de la description, on considère qu'un rebond 16 a été identifié et conservé. Les calculs ultérieurs sont alors basés en partie sur les valeurs indexées par "1", c'est-à-dire correspondantes à l'impact $t_1$ de rebond 16.

On comprend aisément qu'en l'absence de rebond pertinent, ces valeurs indexées par "1" sont à remplacer par celles correspondantes au premier impact 14 de l'avion sur la piste, c'est-à-dire indexées par "0".

L'étape 80 a pour objectif de distinguer les calculs à effectuer en fonction de premiers critères représentatifs de la sévérité de l'impact de l'avion sur la piste. Deux critères rentrent en ligne de compte: d'une part le poids brut $P_{avion}$ de l'avion, et l'incrément d'accélération verticale $\triangle nz_1$ subie par l'avion.

On qualifie l'atterrissage comme faiblement sévère lorsque:

- $\triangle nz_1 < A4$ et $P_{avion} < A5$, où A4 est un paramètre prédéfini et A5 est la masse maximale de calcul à l'atterrissage ou MLW ("*Max Landing Weight*"), ou
- $\triangle nz_1 < A6$ et $P_{avion} > A5$, par exemple A6 = 0,5g.

Dans ce cas, on considère que seuls les trains d'atterrissage peuvent avoir été endommagés. Le traitement est alors plus simple que pour un atterrissage jugé plus sévère comme décrit plus loin.

Ainsi, ici, on détermine à l'aide d'une table prédéfinie (*look-up table*) et selon les différents angles interpolés à l'instant $t_1$, les trains d'atterrissage à inspecter suite à l'atterrissage. En effet, selon les valeurs de tangage et de roulis de l'avion à l'instant $t_1$, les trains d'atterrissage subissant l'impact sont différents. Par exemple, avec un certain angle de roulis, ce sont les trains 1, 2, 4 et 6 qui touchent la piste en premier. Pour un angle de roulis opposé, ce sont les trains d'atterrissage 3, 4, 7 et 8. Dans les cas d'atterrissage faiblement sévère non couverts par les cellules de cette table, aucune inspection de composants de l'avion n'est à prévoir; l'atterrissage n'est pas qualifié de "dur". Cette information déterminée peut être remontée au pilote.

Le traitement se termine alors.

On s'intéresse maintenant plus précisément aux cas où l'on considère l'atterrissage comme potentiellement sévère, c'est-à-dire lorsque:

$$\triangle nz_1 > A4 \text{ et } P_{avion} < A5;$$

ou

$$\triangle nz_1 > A6 \text{ et } P_{avion} > A5.$$

On poursuit alors à l'étape 82 par le calcul d'un coefficient d'adhérence Sr utilisé par la suite comme entrée de certains réseaux de neurones dans l'évaluation des critères de charge. Ce coefficient Sr caractérise une contribution des efforts dus aux roues.

Cette étape 82 comprend tout d'abord la détermination du temps $t_{su}$ de mise en rotation des roues, calculé par exemple comme la valeur minimale du temps de mise en rotation de chaque roue: $t_{su} = \min\{t_{su\_i}\}_{i \in [1; 16]}$. Chaque temps $t_{su\_i}$ de mise en rotation d'une roue $R_i$ est déterminé comme le temps entre $t_{0i}$ précédemment calculé lors de l'étape 72 ci-dessus et un instant $t_{si}$ interpolé au voisinage où la vitesse angulaire $\omega_i$ dépasse une valeur seuil.

L'étape 82 comprend ensuite la détermination du coefficient d'adhérence ou de frottement Sr. A cette fin, on utilise un premier réseau de neurones qui prend, en entrées, certains des paramètres avion précédemment introduits ainsi que les valeurs calculées $\Delta nz_0$ et $t_{su}$.

La configuration du réseau de neurones est généralement effectuée, de façon préalable à son intégration dans l'avion, par l'estimation des poids et seuils adaptés à définir un modèle mathématique liant les paramètres ci-dessus à la valeur Sr souhaitée en sortie.

Ce processus d'élaboration comprend par exemple un ensemble de simulations, par exemple plusieurs milliers de simulations d'atterrissage, dans lesquelles ont fait varier les paramètres d'entrées ci-dessus et on obtient les valeurs simulées correspondant à la grandeur de sortie du réseau de neurones à configurer.

Ces jeux constitués des paramètres d'entrée et des valeurs simulées sons appris par le réseau de neurones selon des techniques classiques qui ne seront pas, par conséquent, plus détaillées ici.

Plusieurs essais d'apprentissage peuvent être réalisés en jouant sur le nombre de neurones par couche et/ou le nombre de couches.

On détermine ensuite, avec d'autres jeux de valeurs pour valider le modèle, un écart type représentatif de l'erreur engendrée par le modèle. Cela consiste à récupérer la valeur de sortie du réseau "ayant appris" en mettant, en entrée, les paramètres d'entrée des jeux pour valider, et à comparer la valeur de sortie avec les valeurs simulées de ces jeux. On conserve alors la configuration de réseau de neurones présentant l'écart type minimal. On peut donc obtenir des architectures de réseaux de neurones différentes selon les modèles mathématiques et les simulations réalisées.

De retour à l'exploitation des valeurs mesurées dans l'avion puis interpolées, en appliquant les valeurs d'entrée au réseau de neurones (aux positions d'entrées respectives prévues lors de l'apprentissage) prévu pour le calcul du coefficient d'adhérence, on obtient une valeur Sr que l'on compare à deux valeurs seuils: 0,8 et A8=0,95.

Si $0,8 \leq Sr \leq A8$, alors Sr = 0,8; permettant de limiter la valeur de l'adhérence à celles classiquement utilisées

Si Sr < 0 ou A8 < Sr, alors le coefficient d'adhérence n'est pas valide. Un message d'erreur est émis et il est mis fin au traitement selon l'invention.

Dans le cas où un rebond 16 a été identifié, on détermine si l'adhérence de la piste a engendré un effort sur les roues, ce qui est le cas lorsqu'au rebond les roues sont faiblement en rotation voire immobiles.

Ainsi, à l'instant $t_1$, on détermine la vitesse minimale des roues que l'on compare à une valeur seuil A9, par exemple 40 noeuds, à partir de laquelle on estime que l'adhérence n'engendre plus d'effort:

$$\text{Si } \min\{\omega_i(t_1)\}_{i\in[1;\,16]} > A9, \text{ alors Sr = 0 car les roues sont déjà en rotation}$$

Sinon Sr est inchangé.

Cette limitation par rapport à A9 est optionnelle et peut être omise pour diminuer les traitements à effectuer.

A la fin de l'étape 82, on dispose de l'ensemble des paramètres calculés ou interpolés (tous issus des paramètres avion enregistrés) pour procéder au calcul à proprement parler de critères de charge sur différents composants structurels de l'avion 10. On rappelle ici que l'on est dans le cas où un atterrissage potentiellement sévère a été détecté.

On passe alors à l'étape 54.

En référence à la **figure 9**, cette étape 54 comprend trois ensembles de calcul de critères de charge ou de sévérité de l'impact, calculs qui peuvent être réalisés successivement ou en parallèle: charge sur le train d'atterrissage du nez (90), charge sur les autres trains d'atterrissage à l'aide de l'accélération latérale (92), et charges sur tout type de composant structurel à surveiller, incluant les trains d'atterrissage si souhaité (94).

Lors de l'étape 90, on calcule à l'aide d'un réseau de neurones un premier paramètre $C_{mod}$, caractérisant la vitesse de l'avion à l'impact considéré. Ce réseau de neurones reçoit en entrée les valeurs calculées ou interpolées précédemment. On rappelle que cette valeur $C_{mod}$ a pu être obtenue lors des simulations de telle sorte que le réseau de neurones génère, ici, un tel paramètre à partir des entrées utilisées.

Puis, on procède aux calculs suivants de sorte à générer un critère de charge du train avant en fonction du poids de l'avion $P_{avion}$, de $C_{mod}$, de l'angle de dérotation $\theta_{d\_derot}$.

En variante, cette deuxième sous-étape peut être intégrée au réseau de neurones utilisé pour le calcul de $C_{mod}$ sans difficulté particulière.

On obtient ainsi un premier critère de charge du train d'atterrissage de nez à l'aide d'un réseau de neurones.

Lors de l'étape 92, on détermine, de façon similaire à l'étape 80, à l'aide d'une table, si une intervention sur un ou plusieurs trains d'atterrissage est nécessaire. L'information est remontée directement au pilote qui la consigne dans son rapport.

Lors de l'étape 94, on détermine le critère de charge pour chacun des composants structurels à surveiller. N'importe quel composant structurel à l'intérieur de l'avion peut être concerné, un réseau de neurones correspondant étant alors prévu comme indiqué précédemment.

Ainsi, on injecte en entrée $x_i$ du réseau de neurones correspondant à un composant à surveiller, un ensemble de paramètres calculés précédemment. Ici, on n'utilise, de façon avantageuse, que des paramètres "avion" issus des capteurs classiques et estimées au moment du toucher concerné par les traitements décrits ci-dessus.

Ce réseau ayant été configuré comme expliqué ci-dessus, il fournit une valeur $C_i$ de critère de charge subie par ledit composant structurel.

A titre d'exemple, on liste ci-après quelques exemples de composants dont il est utile de déterminer les critères de charge subie:

- charge verticale des trains d'atterrissage des ailes ou du fuselage;
- charge de bielle de recul des trains d'atterrissage du fuselage;
- moment de torsion des ailes;
- moment de flexion du fuselage;
- moment de torsion du fuselage; et
- charge verticale du fuselage.

Les critères de charge ainsi obtenus en sortie des différents réseaux de neurones ne sont pas corrélés entre eux, au contraire des paramètres d'entrées qui correspondent généralement à l'instant de l'impact considéré.

Une fois ces critères de charge obtenus, on passe à l'étape 96 déterminant la sévérité de l'atterrissage sur chacun des composants surveillés.

Comme illustré par la **figure 10**, lors de cette étape, on compare le critère de charge $C_i$ obtenu à deux valeurs seuils prédéfinies Si1 et Si2 (spécifiques au composant considéré) comme caractéristiques des capacités structurales du composant. Cette comparaison peut notamment être mise en oeuvre à l'aide d'un ratio entre le critère calculé et par exemple la première valeur seuil Si1.

Si le critère de charge obtenu est inférieur aux deux valeurs seuils, aucun message n'est émis concernant le composant associé.

Si le critère de charge obtenu est supérieur au premier des deux seuils, un message d'un premier type, ici qu'une inspection du composant doit être effectuée, est émis. Cela correspond à un composant ayant potentiellement subi une altération détectable.

Dans ce cas, on vérifie également si le critère de charge est supérieur au deuxième seuil. Dans l'affirmative, le composant doit être considéré comme potentiellement sérieusement endommagé. Un message indiquant qu'une inspection et des vérifications détaillées doivent être effectuées est émis. Généralement, une réparation comme indiquée dans les manuels de réparation structurelle prévus est effectuée. Il peut également être indiqué de contacter le constructeur de l'avion.

Les traitements précédents à base de réseaux de neurones ne nécessitent pas de puissances de calcul considérables. Ainsi, les messages peuvent être émis alors même que l'avion arrive à son emplacement de parking.

Ainsi, le pilote reçoit l'ensemble des messages dont il tient compte dans son rapport de vol. Ces messages lui permettent notamment de confirmer ou infirmer son ressenti de l'atterrissage pour qualifier ou non celui-ci de "dur".

Ces messages peuvent être également sauvegardés ou envoyés, vis les moyens radio 34, à la station 18. Cette dernière dispose ainsi de façon détaillée de l'ensemble des composants à inspecter.

Ainsi, au contraire des nombreuses solutions de l'art antérieur où tous les composants devaient être inspectés en cas d'atterrissage dur, ici l'inspection et la maintenance sont guidées et largement réduites.

La présente invention peut ainsi s'appliquer en vue de la détermination d'un indicateur de sévérité d'atterrissage aussi bien pour les atterrissages classiques, que ceux avec rebond(s) ou avec dérapage du à une accélération latérale.

Les exemples qui précèdent ne sont que des modes de réalisation de l'invention qui ne s'y limite pas.

### Revendications

**1.** Procédé d'aide à la détection d'un atterrissage dur d'un aéronef (10), **caractérisé en ce qu'**il comprend:

- la détermination (72, 76) d'un instant d'impact (14, 16) dudit aéronef sur une piste (12) d'atterrissage à partir de paramètres mesurés;
- l'estimation (74, 78) d'une pluralité desdits paramètres audit instant d'impact déterminé ($t_0$, $t_1$);
- l'estimation (54) d'au moins un critère de charge ($C_i$) d'un composant structurel (100, 102, 104) dudit aéronef (10), ladite estimation comprenant:

    ◦ une étape de calcul d'au moins un critère de charge ($C_i$) dudit composant structurel à l'aide d'au moins un réseau de neurones (36) recevant en entrée ($x_i$) lesdits paramètres estimés.

**2.** Procédé selon la revendication précédente, dans lequel ledit au moins un critère de charge ($C_i$) calculé est comparé (96) à au moins une première valeur seuil (Si1, Si2) de sorte à déterminer une opération d'inspection d'un premier type à opérer sur ledit composant structurel, suite audit atterrissage.

**3.** Procédé selon la revendication 2, dans lequel une pluralité de critères de charge d'une pluralité respective de composants structurels est calculée et le procédé comprend un étape d'indication (58) au pilote de l'aéronef lorsque la comparaison (96) d'au moins un critère de charge est telle qu'une opération d'inspection doit être effectuée.

**4.** Procédé selon la revendications 1, dans lequel ladite détermination d'un instant d'impact comprend le calcul (72) de l'instant ($t_0$) correspondant au premier impact de l'aéronef sur la piste à l'aide de paramètres mesurés représentatifs de la vitesse ($\omega_i$) d'au moins une roue ($R_i$) dudit aéronef, et le calcul d'au moins un autre instant d'impact ($t_1$), postérieur audit instant de premier impact à partir d'un paramètre mesuré d'accélération verticale (nz) dudit aéronef (10).

**5.** Procédé selon la revendication précédente, dans lequel on calcule un incrément d'accélération verticale ($\Delta nz_0$, $\Delta nz_1$) aux voisinages d'au moins deux instants ($t_0$, $t_1$) représentatifs d'au moins deux impacts (14, 16) et on sélectionne l'instant présentant le plus grand incrément.

**6.** Procédé selon la revendication 1, dans lequel lesdits paramètres sont mesurés et enregistrés à compter de l'instant où ledit aéronef passe sous une altitude prédéfinie par rapport à ladite piste d'atterrissage lors d'une phase d'approche.

**7.** Procédé selon la revendication précédente, dans lequel les mesures cessent lorsque l'aéronef atteint une première vitesse prédéterminée ou après une durée donnée, et lesdites étapes de détermination et d'estimation sont déclenchées lorsque l'aéronef atteint une seconde vitesse prédéterminée inférieure ou égale à ladite première vitesse.

**8.** Procédé selon la revendication 1, dans lequel ladite pluralité de paramètres est estimée par interpolation audit instant d'impact desdits paramètres mesurés.

**9.** Procédé selon la revendication 1, comprenant, préalablement à ladite étape de détermination d'un instant d'impact, une étape de vérification (70) des paramètres mesurés.

**10.** Procédé selon la revendication 1, dans lequel on crée et calcule au moins un paramètre non mesuré (Sr).

**11.** Système (20) d'aide à la détection d'un atterrissage dur d'un aéronef, **caractérisé en ce qu'**il comprend:

- des moyens de mesures ($22_i$) de paramètres dudit aéronef;
- un moyen de détermination d'un instant d'impact dudit aéronef sur une piste d'atterrissage à partir desdits paramètres mesurés;
- un moyen d'estimation d'une pluralité desdits paramètres audit instant d'impact déterminé;
- un système d'estimation d'au moins un critère de charge ($C_i$) d'un composant structurel dudit aéronef, comprenant:

  ◦ au moins un réseau de neurones (36) agencé pour recevoir en entrée lesdits paramètres estimés et pour fournir en sortie au moins un critère de charge dudit composant structurel.

**12.** Aéronef (10) comprenant un système (20) d'aide à la détection d'un atterrissage dur selon la revendication précédente.

**Patentansprüche**

**1.** Verfahren zur Unterstützung bei der Erkennung einer Hartlandung eines Flugzeugs (10), **dadurch gekennzeichnet, dass** es Folgendes umfasst:

- das Bestimmen (72, 76) eines Zeitpunkts des Auftreffens (14, 16) des Flugzeugs auf eine Landebahn (12) anhand von gemessenen Parametern;
- das Schätzen (74, 78) mehrerer der Parameter zum bestimmten Zeitpunkt des Auftreffens ($t_0$, $t_1$);
- das Schätzen (54) mindestens eines Belastungskriteriums ($C_i$) einer Strukturkomponente (100, 102, 104) des Flugzeugs (10), das Schätzen umfassend:

  ◦ einen Schritt des Berechnens mindestens eines Belastungskriteriums ($C_i$) der Strukturkomponente mithilfe

mindestens eines neuronalen Netzwerks (36), das die geschätzten Parameter am Eingang ($x_i$) empfängt.

**2.** Verfahren nach dem vorhergehenden Anspruch, wobei das mindestens eine berechnete Belastungskriterium ($C_i$) mit mindestens einem ersten Schwellenwert (Si1, Si2) verglichen (96) wird, um einen Prüfvorgang eines ersten Typs zu bestimmen, der nach der Landung an der Strukturkomponente durchzuführen ist.

**3.** Verfahren nach Anspruch 2, wobei mehrere Belastungskriterien mehrerer jeweiliger Strukturkomponenten berechnet werden und das Verfahren einen Schritt des Anzeigens (58) dem Piloten des Flugzeugs umfasst, wenn der Vergleich (96) mindestens eines Belastungskriteriums derart ist, dass ein Prüfvorgang durchgeführt werden muss.

**4.** Verfahren nach Anspruch 1, wobei das Bestimmen eines Zeitpunkts des Auftreffens das Berechnen (72) des Zeitpunkts ($t_0$), der dem ersten Auftreffen des Flugzeugs auf die Bahn entspricht, mithilfe gemessener Parameter, die für die Geschwindigkeit ($\omega_i$) mindestens eines Rads (Ri) des Flugzeugs repräsentativ sind, und das Berechnen mindestens eines anderen Zeitpunkts des Auftreffens ($t_1$) nach dem Zeitpunkt des ersten Auftreffens anhand eines gemessenen Parameters der vertikalen Beschleunigung (nz) des Flugzeugs (10) umfasst.

**5.** Verfahren nach dem vorhergehenden Anspruch, wobei ein Inkrement der vertikalen Beschleunigung ($\Delta nz_0$, $\Delta nz_1$) in der Nähe mindestens zweier Zeitpunkte ($t_0$, $t_1$), die für mindestens zwei Auftreffen (14, 16) repräsentativ sind, berechnet wird, und der Zeitpunkt ausgewählt wird, der das größte Inkrement aufweist.

**6.** Verfahren nach Anspruch 1, wobei die Parameter ab dem Zeitpunkt gemessen und aufgezeichnet werden, zu dem das Flugzeug bei einer Anflugphase unter eine vorgegebene Höhe im Verhältnis zur Landebahn sinkt.

**7.** Verfahren nach dem vorhergehenden Anspruch, wobei die Messungen wenn das Flugzeug eine erste vorbestimmte Geschwindigkeit erreicht, oder nach einer gegebenen Zeitdauer aufhören, und die Schritte des Bestimmens und des Schätzens ausgelöst werden, wenn das Flugzeug eine zweite vorbestimmte Geschwindigkeit erreicht, die kleiner oder gleich der ersten Geschwindigkeit ist.

**8.** Verfahren nach Anspruch 1, wobei die mehreren Parameter durch Interpolation der gemessenen Parameter zum Zeitpunkt des Auftreffens geschätzt werden.

**9.** Verfahren nach Anspruch 1, umfassend einen Schritt des Überprüfens (70) der gemessenen Parameter vor dem Schritt des Bestimmens eines Zeitpunkts des Auftreffens.

**10.** Verfahren nach Anspruch 1, wobei mindestens ein nicht gemessener Parameter (Sr) erzeugt und berechnet wird.

**11.** System (20) zur Unterstützung bei der Erkennung einer Hartlandung eines Flugzeugs, **dadurch gekennzeichnet, dass** es Folgendes umfasst:

- Mittel zum Messen ($22_i$) von Parametern des Flugzeugs;
- ein Mittel zum Bestimmen eines Zeitpunkts des Auftreffens des Flugzeugs auf eine Landebahn anhand der gemessenen Parameter;
- ein Mittel zum Schätzen mehrerer der Parameter zum bestimmten Zeitpunkt des Auftreffens;
- ein System zum Schätzen mindestens eines Belastungskriteriums ($C_i$) einer Strukturkomponente des Flugzeugs, umfassend:

○ mindestens ein neuronales Netzwerk (36), das angeordnet ist, die geschätzten Parameter am Eingang zu empfangen und mindestens ein Belastungskriterium der Strukturkomponente am Ausgang zu liefern.

**12.** Flugzeug (10), umfassend ein System (20) zur Unterstützung bei der Erkennung einer Hartlandung nach dem vorhergehenden Anspruch.

**Claims**

**1.** A method for assistance in detection of a hard landing of an aircraft (10), **characterized in that** it comprises:

- determining (72, 76) an instant of impact (14, 16) of said aircraft on a landing runway (12) from measured parameters;
- estimating (74, 78) a plurality of said parameters at said determined instant of impact ($t_0$, $t_1$);
- estimating (54) at least one load criterion ($C_i$) for a structural component (100, 102, 104) of said aircraft (10), said estimating comprising:

 ◦ a step of calculating at least one load criterion ($C_i$) for said structural component with at least one neural network (36) receiving said estimated parameters as input ($x_i$).

**2.** The method according to the preceding claim, wherein said at least one calculated load criterion ($C_i$) is compared (96) with at least one first threshold value (Si1, Si2) so as to determine an inspection operation of a first type to be carried out on said structural component, following said landing.

**3.** The method according to claim 2, in which a plurality of load criteria of a respective plurality of structural components is calculated, and the method comprises a step (58) of indicating to the pilot of the aircraft when the comparison (96) of at least one load criterion is such that an inspection operation should be performed.

**4.** The method according to claim 1, wherein said determination of an instant of impact comprises calculating (72) the instant ($t_0$) corresponding to the first impact of the aircraft on the runway based on measured parameters representative of the speed ($\omega_i$) of at least one wheel ($R_i$) of said aircraft, and calculating at least one other instant of impact ($t_1$), subsequent to said instant of first impact from a measured parameter of vertical acceleration (nz) of said aircraft (10).

**5.** The method according to the preceding claim, wherein an increment of vertical acceleration ($\Delta nz_0$, $\Delta nz_1$) is calculated in the vicinities of at least two instants ($t_0$, $t_1$) representative of at least two impacts (14, 16) and the instant having the greatest increment is selected.

**6.** The method according to claim 1, in which said parameters are measured and recorded starting from the instant at which said aircraft passes under a predefined altitude in relation to said landing runway during an approach phase.

**7.** The method according to the preceding claim, in which measurements stop when the aircraft reaches a first predetermined speed or after a given time, and said steps of determining and estimating are initiated when the aircraft reaches a second predetermined speed lower than or equal to said first speed.

**8.** The method according to claim 1, in which said plurality of parameters is estimated by interpolation of said measured parameters at said instant of impact.

**9.** The method according to claim 1, comprising, prior to said step of determining an instant of impact, a step (70) of verifying the measured parameters.

**10.** The method according to claim 1, in which at least one unmeasured parameter (Sr) is created and calculated.

**11.** A system (20) for assistance in detection of a hard landing of an aircraft, **characterized in that** it comprises:

 - means ($22_i$) for measuring parameters of said aircraft;
 - a means for determining an instant of impact of said aircraft on a landing runway from said measured parameters;
 - a means for estimating a plurality of said parameters at said determined instant of impact;
 - a system for estimating at least one load criterion ($C_i$) for a structural component of said aircraft, said system comprising:

  o at least one neural network (36) designed to receive said estimated parameters as input and to provide at least one load criterion for said structural component as output.

**12.** An aircraft (10) comprising a system (20) for assistance in detection of a hard landing according to the preceding claim.

Figure 1

Figure 2

$$s=\sum c_k \cdot z_k$$
$$z_k = f(b_{0,k} + \sum b_{j,k} \cdot y_j)$$
$$y_j = f(a_{0,j} + \sum a_{i,j} \cdot x_i)$$

Figure 3

Figure 4

Figure 5

Figure 6

nez

1 — 2

5 — 6

aile
gauche

3 — 4

7 — 8

aile
droite

9 — 10

13 — 14

17 — 18

fuselage
gauche

11 — 12

15 — 16

19 — 20

fuselage
droit

21 — 22

Signal mesuré

vitesse roue
(km/h)

140
120
100
80
60
40
20
0

A1

4,90    4,95    5,00    t-Δt    t    t+Δt  5,20    5,25    5,30

temps
(s)

toi1    toi2    toi3=toi
toucher

Interpolation 3
Interpolation 2
Interpolation 1

Figure 7

Accélération verticale

Figure 8

Figure 9

Figure 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0657723 A1
- US 2008114506 A

- US 20080114506 A